# EUROPÄISCHE PATENTSCHRIFT

(11) **EP 0 945 160 B1**
(45) Veröffentlichungstag und Bekanntmachung des Hinweises auf die Patenterteilung: **08.09.2004**
(21) Anmeldenummer: 99103521.3
(22) Anmeldetag: 24.02.1999
(51) Int. Cl.: B01D 46/24, B01D 29/11, B01D 46/52

(54) **Endscheibe aus Polyamid für ein Ringfilterelement mit radial wirkender Dichtung aus Kautschuk**
Polyamide end disc for an annular filter element with a rubber seal which acts radially
Disque terminal en polyamide pour un élément filtrant annulaire à joint agissant radialement en caoutchouc

(30) Priorität: 26.03.1998 DE 19813319
(43) Veröffentlichungstag der Anmeldung: 29.09.1999
(73) Patentinhaber: MAHLE Filtersysteme GmbH, 70376 Stuttgart (DE)
(72) Erfinder: Schneider, Horst, 71336 Waiblingen (DE); Waibel, Hans, 71686 Remseck/Aldingen (DE)
(74) Vertreter: Patentanwalts-Partnerschaft, Rotermund + Pfusch + Bernhard

(56) Entgegenhaltungen:
- DE-A- 4 416 577
- DE-A- 19 521 898
- DE-A- 19 535 103

## Beschreibung

Die Erfindung betrifft eine ringförmige Kunststoff-Endscheibe aus Polyamid für ein radial durchströmbares Kraftstoff- oder Schmierölringfilter eines Verbrennungsmotors.

Eine solche Endscheibe soll radial innen oder außen mit einem Elastomer-Dichtring versehen sein, der einfach aufbringbar ist und betriebssicher dichtet. Die zu filternden Medien Kraftstoff und Schmieröl erfordern gegen diese Medien beständige Kunststoffe, wobei sich Polyamid als ein in dieser Hinsicht besonders geeigneter Werkstoff erwiesen hat und deshalb bei solchen Filtern, wenn sie in einer hochwertigen Ausführung vorliegen sollen, eingesetzt werden müssen. Polyamid besitzt allerdings den Nachteil, nicht wie üblicherweise als Verbundwerkstoff mit anderen Werkstoffen, insbesondere Werkstoffen mit elastomeren Eigenschaften herstellbar zu sein. Bei Schmieröl- und Kraftstofffiltern von Verbrennungsmotoren wurden daher bisher bei Polyamidendscheiben derartiger Ringfilter jeweils ein- bzw. aufgesetzte, eigenständig hergestellte Dichtringe aus Schmieröl- bzw. Kraftstoff beständigem Material mit elastomeren Eigenschaften eingesetzt.

Aus DE-A-195 21 898 ist ein Ringfilterelement mit Endscheiben für ausschließlich Ansaugluft als zu filterndes Medium bekannt. Als konkretes Material für die betreffenden Endscheiben ist beispielsweise Polypropylen angegeben, mit dem bekanntermaßen in Kombination mit anderen Kunststoffverbundbauteile erzeugbar sind.

Auch aus DE-A-195 35 103 ist lediglich ein ringförmiges Luftfilter bekannt. Endscheiben aus Verbundmaterial sind dort nicht vorgesehen. Angegeben sind dort eine Reihe von Kunststoffen, die sich zur Herstellung von einerseits Teilen des Filtergehäuses und andererseits separat hergestellten und einsetzbaren Dichtungen eignen. Endscheiben für Ringfilter aus Polyamid in Verbundbauweise mit einem elastischen Dichtungsmaterial sind in jenem Dokument nicht beschrieben.

Ausgehend von der allgemein bekannten Problematik, das Polyamid aus dem die Endscheibe des Ringfilters bestehen soll, nicht ohne weiteres mit einem schmierstoff- und kraftstoffbeständigen Elastomer verbindbar ist, beschäftigt sich die vorliegende Erfindung mit der Aufgabe, hier dennoch einen Weg zu finden, um bei Polyamidendscheiben von Ringfiltern in Schmieröl- oder Kraftstofffiltern einstückige, die erforderlichen Dichtungen bereits enthaltende Ausführungen bereitstellen zu können.

Gelöst wird diese Aufgabe durch eine ringförmige Kunststoff-Endscheibe aus Polyamid mit sämtlichen Merkmalen des Patentanspruchs 1.

Zweckmäßige Ausgestaltungen der Erfindung sind Gegenstand der Unteransprüche.

Ein nachstehend noch näher erläutertes Ausführungsbeispiel ist in der Zeichnung dargestellt.

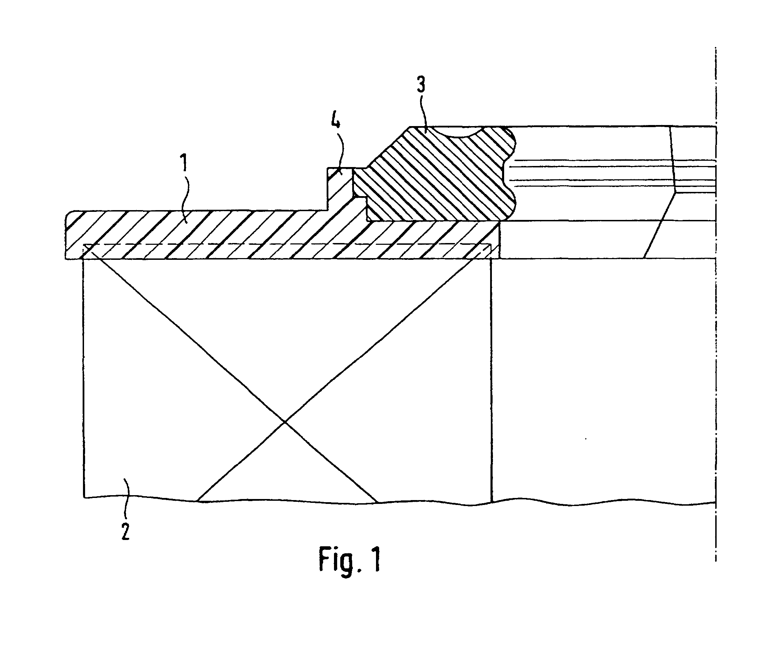

Es zeigt
- Fig. 1: einen Ausschnitt einer ringförmigen Endscheibe an einem Ringfilter.

Eine ringförmige Endscheibe 1 aus Polyamid-Material ist mit einer Stirnseite eines zu einem Ringfilter gefalteten Bahnenmaterials 2 dicht verbunden. Die dichte Verbindung ist dadurch gegeben, daß die Stirnkanten des Bahnenmaterials 2 in das Endscheiben-Material einplastifiziert sind, wozu das Endscheibenmaterial in dem für die Einplastifizierung vorgesehenen Bereich durch kurzzeitige Erwärmung in einen plastischen Zustand versetzt wird.

An der axialen Außenseite ist radial innen auf der Endscheibe 1 ein radial dichtender Dichtring 3 vorgesehen. Dieser Dichtring 3 besteht aus Athylenacrylat-Kautschuk (AEM) oder Acrylat-Kautschuk (ACM). Radial außen liegt der Dichtring 3 an einem axial von der Endscheibe 1 abragenden Ringbund 4 an. Der Dichtring 3 ist in einer Spritzgußform an das Material der bereits fertig vorliegenden Endscheibe 1 augespritz. Das angespritzte Dichtring-Material geht eine aminisch, peroxidische Vernetzung mit dem Polyamid der Endscheibe ein und ist damit absolut fest und sicher mit dem Material der Endscheibe 1 verbunden.

Mit der erfindungsgemäßen Lösung ist es erstmals möglich, ein Elastomer-Dichtringmaterial haftfest auf eine Filter-Endscheibe aus Polyamid aufzuspritzen. Bei zu filternden Medien wie Kraftstoff oder Schmieröl für Verbrennungsmotoren ist Polyamid als Werkstoff für Endscheiben 1 aus Gründen einer ausreichenden Beständigkeit gegen zu filternde Medien erforderlich.

## Patentansprüche

1. Ringförmige Kunststoff-Endscheibe aus Polyamid eines radial durchströmbaren Kraftstoff- oder Schmieröl-Ringfilters eines Verbrennungsmotors, bei der
- das Ringfiltermaterial, insbesondere zick-zack-förmig gefaltetes Bahnenmaterial, für eine dichte Verbindung in die Endscheibe einplastifiziert ist,
- im Bereich ihres Innen- oder Außenumfanges ein radial dichtender Elastomer-Dichtring vorgesehen ist,
- der Elastomer-Dichtring (3) aus Ethylen-Acrylat-Kautschuk (AIM) oder Acrylat-Kautschuk (ACM) besteht und auf die bereits vorgefertigte Polyamid-Endscheibe unter aminisch, peroxidischer Vernetzung mit dem Polyamid angespritzt ist.

2. Kunststoff-Endscheibe nach Anspruch 1,
**dadurch gekennzeichnet,**
**daß** der Dichtring (3) an dem seinem Dichtumfang entgegengesetzten Umfang an einen von der Endscheibe (1) axial abragenden Ringbund (4) angespritzt ist.

3. Kunststoff-Endscheibe nach Anspruch 1 oder 2,
**dadurch gekennzeichnet,**
**daß** sich der Ringbund (4) mindestens über etwa die halbe Höhe des Dichtringes (3) erstreckt.

## Claims

1. An annular plastic end disc made of polyamide of a fuel or lubricant ring filter in an internal combustion engine with radial cross-flow, in which
- the ring filter material, in particular web material folded zigzag, is plasticised directly in the end disc for a tight connection,
- a radial sealing elastomer sealing ring is provided in the region of its inner or outer circumference,
- the elastomer seal (3) comprises ethylene acrylate rubber (ATM) or acrylate rubber (ACM) and is injected directly onto the already prefabricated polyamide end disc with amine, peroxide crosslinking with the polyamide.

2. The plastic end disc as claimed in Claim 1, **characterised in that** the sealing ring (3) on the circumference opposite its sealing circumference is injected directly onto an annular collar (4) protruding axially from the end disc (1).

3. The plastic end disc as claimed in Claim 1 or 2, **characterised in that** the annular collar (4) extends at least over approximately half the height of the sealing ring (3).

## Revendications

1. Disque terminal synthétique de forme annulaire en polyamide d'un filtre annulaire d'un moteur à combustion pouvant être parcouru de façon radiale pour de l'huile de graissage ou du carburant, pour lequel
- le matériau filtrant annulaire, notamment un matériau en bandes pliées sous forme de zigzag, est plastifié pour un raccord étanche dans le disque terminal,
- une bague d'étanchéité en élastomère permettant une étanchéité radiale est prévue dans la zone de la circonférence interne ou externe,
- la bague d'étanchéité en élastomère (3) se compose de caoutchouc d'éthylène acrylate (AIM) ou de caoutchouc d'acrylate (ACM) et est moulée par injection sur le disque terminal en polyamide déjà préusiné par réticulation au peroxyde et à l'amine avec le polyamide.

2. Disque terminal synthétique selon la revendication 1,
**caractérisé en ce que**, la bague d'étanchéité (3) est moulée par injection au niveau de la circonférence opposée à sa circonférence étanche au niveau du collet de la bague (4) dépassant de façon axiale du disque terminal (1).

3. Disque terminal synthétique selon la revendication 1 ou 2,
**caractérisé en ce que**, le collet de la bague (4) s'étend au moins sur la moitié de la hauteur environ de la bague d'étanchéité (3).
